# EUROPEAN PATENT SPECIFICATION

(11) **EP 3 034 474 B1**
(45) Date of publication and mention of the grant of the patent: **23.10.2024**
(21) Application number: 15184679.7
(22) Date of filing: 10.09.2015
(51) Int. Cl.: C02F 9/00, C02F 1/68, C02F 1/66, C02F 1/42, C02F 1/44

(54) **APPARATUS AND METHOD FOR CONDITIONING AN AQUEOUS LIQUID**
VORRICHTUNG UND VERFAHREN ZUR KONDITIONIERUNG EINER WÄSSRIGEN FLÜSSIGKEIT
DISPOSITIF ET MÉTHODE POUR CONDITIONNER UN LIQUIDE AQUEUX

(43) Date of publication of application: 22.06.2016
(73) Proprietor: BRITA SE, 65232 Taunusstein (DE)
(72) Inventor: Köhler, André, 56237 Deesen (DE); Weidner, Peter, 92444 Rötz (DE); Floren, Simon, 65620 Waldbrunn (DE); Conradt, Berthold, 65205 Wiesbaden (DE)
(74) Representative: Meissner Bolte Düsseldorf Patentanwälte Rechtsanwälte Partnerschaft mbB

(56) References cited:
- EP-A1- 2 898 782
- WO-A1-2007/107548
- WO-A1-2009/135113
- WO-A1-2014/093049
- DE-A1- 1 955 571

## Description

The invention relates to an apparatus for conditioning an aqueous liquid according to the pre-amble of claim 1.

The invention also relates to a method of conditioning an aqueous liquid according to the pre-amble of claim 7.

WO 2007/107548 A1 discloses a device for the preparation of pure water with a first raw water vessel that is heated to an evaporation temperature. A plurality of raw water vessels is provided, in each of which heating to an evaporation temperature is effected, wherein the pressures in the vessels are set differently. The pure water is led through solid mineral. To set the mineral contents, the pure water can also be led past the solid material through a bypass conduit. In an embodiment, a dosing device is provided before the branch-off to the bypass conduit for dosing CO₂. The dosing pump feeds in CO₂ in the required amount.

DE 1 955 571 A1 discloses a method of increasing the hardness of distilled water, in particular distillates obtained from the desalination of sea water or brackish water. Carbon dioxide obtained by acidifying the raw water is used to introduce gas into the distillate, and the CO₂-containing distillate is subsequently basified with calcium and/or magnesium compounds. The water gasified with CO₂ may have milk of lime added to it or it may be led over limestone, dolomitic material or half-burnt dolomite. Brackish water may be added prior to the basifying. The dosage is amenable to control in the sense that the amount of added brackish water can be controlled via the composition of the water mix. Control of the amount of added basification means may be accomplished in the same way. The pH of the water mix or the electrical conductivity may be taken as the criterion for the composition of the water mix.

WO 2014/093049 A1 discloses in a first embodiment a water conditioning system that can process or continue processing purified water. The water conditioning system can add a desirable amount of CO₂ (e.g. medical grade COz) into the purified water. Thereafter, the added CO₂ can allow the water conditioning system to add minerals to the water (to form re-mineralised water), which can be in a bicarbonate form. A system controller can operate a CO₂ valve to release a desired and/or precise amount of the CO₂ gas into the purified water, thereby forming carbonic acid purified water. Subsequently, in some embodiments, the carbonic acid purified water can flow out of the carbonator tank and into a first mineralisation tank. The first mineralisation tank can have minerals and stones, such as lodestones, which can supply the desired minerals and elements into the carbonic acid purified water to form the first mineralised drinking water. The water conditioning system can have a valve, which can control entry of the carbonic acid purified water into the first mineralisation tank. If the valve is open, a mixture of carbonic acid purified water and first mineralised drinking water can flow into the first mineralisation tank. The first mineralised drinking water can be further processed in a conditioning system. A second mineralisation tank can contain a salt mixture of natural salts, such as potassium, sodium, calcium and magnesium. A proportional feeder can draw the salt mixture from the second mineralisation tank and mix the salt mixture with the first mineralised drinking water passing through the proportional feeder. After the salt mixture is mixed with the first mineralised drinking water, the second mineralised drinking water can flow to a water dispenser. Alternatively, the second mineralised drinking water can flow into a UV treatment unit. Hence, a final mineralised drinking water exits the UV treatment unit. The conditioning system can have a final conductivity sensor, which can measure the conductivity and/or resistivity of the final mineralised drinking water. Thus, the system controller can obtain an approximate percentage value of dissolved solids in the final mineralised drinking water. The conditioning system can also have a final pH sensor, which reads the pH level in the final mineralised drinking water.

WO 2014/093049 A1 also discloses a water production system that is configured for installation under a counter. The system includes an adapter that is configured for attachment to a cold side domestic water supply. A filter that is fluidly coupled to the adapter filters the water so that no particles in excess of 5 microns pass through. A further filter that contains a metallic-based and biostatic material such as KDF or one of its substitutes that removes chlorine via a redox reaction that changes the chlorine to chloride and also a special enhanced activated carbon is attached to the filter. Fluidly connected to the water [sic] from the further filter through a valve is a cylindrical housing or housings containing a reverse osmosis membrane or membranes. The water from the valve flows axially through the membrane and divides into two paths internally. One path is to drain. The other flow from the membrane/housing assembly is referred to as product water. This water exits the housing through a check valve. The product flow after the check valve is fluidly connected to the shut-off valve and from there it is fluidly connected to a cation resin cartridge filter. Water entering the filter is first exposed to a cation resin where all remaining dissolved solids with a positive valence are exchanged for hydrogen ions. The resulting acid water then passes through a volume of special anion resin. This resin will remove anions, thus neutralising the acids, except for the mild carbon dioxide portion of the carbonic acid which is desired to produce a desired resulting chemistry of the finished water for the user. Water exiting the cation resin cartridge filter is fluidly connected to a duplicate polishing version of the cation resin cartridge filter. Yet a further filter is fluidly connected to the duplicate polishing version of the cation resin cartridge filter and contains a salt of magnesium. Because the water from the polishing filter is like water from the cation resin cartridge filter in that it contains mild carbonic acid, the scale is slowly dissolved, thus imparting magnesium bicarbonate to the water. A valve fluidly connects the inlet to the outlet of the filter containing the salt of magnesium, permitting an end user to variably control the degree of magnesium bicarbonate in the water. When the valve is fully closed, all water will pass through the filter, thus maximising the concentration. When the valve is fully open, virtually all water will bypass the filter due to the pressure drop caused by the need for water to pass through the media, thus minimising the presence of magnesium bicarbonate.

A problem of the known arrangement is that the pH and the carbonate hardness of the water change in tandem when the valve settings are adjusted. This may make it difficult to obtain water optimal for certain purposes, e.g. preparing a beverage by extraction.

It is an object of the invention to provide an apparatus and method of the types mentioned above in the opening paragraphs that allow a relatively wide range of values of the carbonate hardness of the conditioned liquid to be obtained within constraints on the pH.

This object is achieved according to a first aspect by the apparatus according to the invention, which is defined in claim 1.

The level of CO₂ in the liquid into which at least one mineral contributing to carbonate hardness is dissolved determines the carbonate hardness of that liquid. This mineral will be present as an undissolved salt in a sub-section of the processing section forming a system closed to CO₂ in gas form. Regardless of the available amount of free CO₂, an aqueous liquid in a closed system and in equilibrium with a mineral contributing to carbonate hardness, when dissolved, will have a pH in a relatively narrow band, provided the CO₂ level is within the right range. That is to say, the pH will vary relatively little with the CO₂ level within that range. Indeed, for a mineral such as magnesium carbonate, the pH will always be about 10. This corresponds to equilibrium between HCO₃⁻ and CO₃²⁻. In any event, it is possible to set the CO₂ level to a value at which the pH and carbonate hardness are relatively stable, but probably too high. The blending at an adjustable ratio allows the correct values to be achieved. If the pH is then not within the required range, the CO₂ level can be changed without affecting the carbonate hardness very much. It is thus possible to obtain a wider range of values of the carbonate hardness without a concomitant variation in the pH. When used to treat water for preparing a beverage by extraction, e.g. coffee, the apparatus allows both the pH and the carbonate hardness to fall within the recommended ranges. The wider range of combinations of values of the pH and the carbonate hardness that can be set is achieved without the need to add acid to the liquid. Compared with general remineralisation or increasing the permanent hardness, raising the carbonate hardness results in liquid that acts as a pH buffer. It is more suitable for subsequent use in appliances such as beverage makers, steamers or dish washers without causing corrosion.

The adjustment of the blending ratio and/or the adjustment of the level of CO₂ may be effected by adjusting settings of the apparatus by hand, e.g. with the aid of tables indicating appropriate values in dependence on the characteristics of the liquid before treatment by the apparatus. Alternatively, automatic regulation or control may be provided for. The level of CO₂ may be increased by mixing liquid directly with CO₂ in gas form, optionally followed by degassing in dependence on a certain target value of the level.

In an embodiment, the at least one device for increasing the level of CO₂ in the liquid includes at least one liquid treatment device for the treatment of liquid by ion exchange including a cation exchange material of which at least a portion is in the hydrogen form.

This embodiment is suitable for obtaining the levels of CO₂ typically appropriate for application of the apparatus in a point-of use environment, e.g. for conditioning liquid supplied to a beverage machine. Typically, levels in the order of mg·l⁻¹ would be appropriate in such case. Obtaining such levels by direct injection of CO₂ in gas form without subsequent degassing is more difficult. The liquid treatment device for the treatment of liquid by ion exchange is effective to release hydrogen in exchange for the cations of carbonate minerals in the liquid supplied to the apparatus. This increases the level of free CO₂ in the liquid. The apparatus forms an essentially closed system, so that the CO₂ is not released but remains in the liquid.

In a variant of this embodiment, the cation exchange material includes a weakly acidic cation exchange resin of which at least a portion is in the hydrogen form.

The weakly acidic cation exchange resin does not lower the pH as much as strongly acidic cation exchange resin. Moreover, the weakly acidic cation exchange resin does not exchange hydrogen for cations of all salts but generally only for cations of carbonate and bicarbonate salts. Thus, more free CO₂ is generated for a given treatment capacity of the resin. More free CO₂ means that a higher concentration of minerals contributing to carbonate hardness in water can be achieved in the liquid produced by the apparatus. Furthermore, the volumetric ion exchange capacity is generally higher than that of strongly acidic cation exchange resins. Also, if the resin has carboxyl functional groups, typical for weakly acidic cation exchange resin, then the selectivity towards calcium and magnesium is relatively high.

In a variant of the embodiment in which the at least one device for increasing the level of CO₂ in the liquid includes at least one liquid treatment device for the treatment of liquid by ion exchange including a cation exchange material of which at least a portion is in the hydrogen form, the at least one liquid treatment device for the treatment of liquid by ion exchange includes at least one replaceable liquid treatment cartridge housing the cation exchange material.

This embodiment makes it possible to use cation exchange material that is not easily regenerated or conditioned at a point of use. This will generally be the case, because at least a portion of the cation exchange material is in the hydrogen form. This material will usually be regenerated using hydrochloric acid. The replaceable liquid treatment cartridge may be connected in liquid communication with a head part having an inlet in liquid communication with the apparatus inlet and an outlet in liquid communication with an inlet of the membrane filtration device. Connection to conduits establishing the liquid communication may be generally permanent, e.g. requiring tools to be disestablished. By contrast, a mechanical interface facilitates locking and release of the liquid treatment cartridge to the head part, e.g. without the use of tools.

In a variant of the embodiment of the apparatus in which the at least one device for increasing the level of CO₂ in the liquid includes at least one liquid treatment device for the treatment of liquid by ion exchange including a cation exchange material of which at least a portion is in the hydrogen form, the at least one device for increasing a level of CO₂ in the liquid includes at least one device, e.g. a variable-ratio flow divider, for adjusting a volumetric flow rate ratio between liquid flowing through a section of the at least one liquid treatment devices containing the cation exchange material of which at least a portion is in the hydrogen form to a mixing location and liquid flowing along a flow path bypassing the section and leading to the mixing location.

This variant allows the regulation or control of the carbonate hardness of a conditioned aqueous liquid produced by the liquid treatment apparatus through regulation or control of the level of free CO₂ in the liquid passed to the processing section. Thus, this parameter can be varied according to requirements or kept constant in the face of variations in the composition of the liquid supplied to the inlet of the apparatus. It is noted that the device for adjusting a volumetric flow rate ratio may be operable by hand, e.g. with the aid of a table relating settings of the device to a target value of a measure of the concentration of components contributing to carbonate hardness.

However, a particular variant includes a control device for providing a signal to the device for adjusting the volumetric flow rate ratio in dependence on at least one of a target value and a target range of a measure of a concentration of components contributing to carbonate hardness.

In this variant, a consumer of a conditioned aqueous liquid supplied by the liquid treatment apparatus can specify the carbonate hardness, e.g. as a target value or a target range or in terms of information that allows the control device to derive a target value or target range. This is then converted in to a required level of free CO₂, which the control device causes to be generated. The measure may correspond to the carbonate hardness, e.g. expressed as °dH or the equivalent concentration of CaCO₃, for example. It may be the specific electric conductance, e.g. adjusted for deviations from a reference temperature. The measure may also be the specific electrical conductance as measured by an ion-selective sensor.

In a variant of the embodiment of the apparatus in which the at least one device for increasing the level of CO₂ in the liquid includes at least one liquid treatment device for the treatment of liquid by ion exchange including a cation exchange material of which at least a portion is in the hydrogen form, wherein the at least one device for increasing a level of CO₂ in the liquid includes at least one device, e.g. a variable-ratio flow divider, for adjusting a volumetric flow rate ratio between liquid flowing through a section of the at least one liquid treatment devices containing the cation exchange material of which at least a portion is in the hydrogen form to a mixing location and liquid flowing along a flow path bypassing the section and leading to the mixing location, the flow path bypassing the section passes through a further liquid treatment section, e.g. a liquid treatment section for the treatment of liquid by sorption.

This variant of the apparatus ensures that the conditioned liquid can meet further requirements such as a maximum level of organic substances. Where the apparatus includes a membrane filtration device downstream of the device for increasing the level of CO₂ in the liquid, this variant may also help protect the membrane or membranes. Components having an adverse effect on the lifespan of the membrane or membranes can be removed.

In a variant of this embodiment in which the at least one device for increasing the level of CO₂ in the liquid includes at least one liquid treatment device for the treatment of liquid by ion exchange including a cation exchange material of which at least a portion is in the hydrogen form and the at least one liquid treatment device for the treatment of liquid by ion exchange includes at least one replaceable liquid treatment cartridge housing the cation exchange material, the further liquid treatment section is contained in the replaceable liquid treatment cartridge.

The further treatment section may thus have a finite treatment capacity that is exhausted during use. When exhausted, the further treatment section is replaced. The capacity of the section containing the cation exchange material of which at least a portion is in the hydrogen form and that of the further treatment section may be at least approximately matched. By combining both treatment sections in one cartridge, only one head part and set of connecting conduits need be provided.

In an embodiment in which the at least one device for increasing the level of CO₂ in the liquid includes at least one liquid treatment device for the treatment of liquid by ion exchange including a cation exchange material of which at least a portion is in the hydrogen form and the at least one liquid treatment device for the treatment of liquid by ion exchange includes at least one replaceable liquid treatment cartridge housing the cation exchange material, wherein the at least one device for increasing a level of CO₂ in the liquid includes at least one device, e.g. a variable-ratio flow divider, for adjusting a volumetric flow rate ratio between liquid flowing through a section of the at least one liquid treatment devices containing the cation exchange material of which at least a portion is in the hydrogen form to a mixing location and liquid flowing along a flow path bypassing the section and leading to the mixing location, the mixing location is located in the replaceable liquid treatment cartridge.

The number of connections between the replaceable liquid treatment cartridge and a head part to which it is connected, in use, can therefore be relatively small.

In an embodiment of the apparatus in which the at least one device for increasing the level of CO₂ in the liquid includes at least one liquid treatment device for the treatment of liquid by ion exchange including a cation exchange material of which at least a portion is in the hydrogen form, wherein the at least one liquid treatment device for the treatment of liquid by ion exchange includes at least one replaceable liquid treatment cartridge housing the cation exchange material and wherein the at least one device for increasing a level of CO₂ in the liquid includes at least one device, e.g. a variable-ratio flow divider, for adjusting a volumetric flow rate ratio between liquid flowing through a section of the at least one liquid treatment devices containing the cation exchange material of which at least a portion is in the hydrogen form to a mixing location and liquid flowing along a flow path bypassing the section and leading to the mixing location, the apparatus includes at least one inlet and a flow divider, e.g. located in a head part for receiving at least a section of a replaceable liquid treatment cartridge, for dividing a flow of liquid from at least one of the at least one inlets into a sub-flow passing through the section of the at least one liquid treatment devices containing the cation exchange material of which at least a portion is in the hydrogen form and a sub-flow bypassing the section.

The flow divider may be a variable-ratio flow divider to split an incoming flow of liquid into two sub-flows at a ratio determined by variable settings of the flow divider, with each sub-flow being supplied through a separate inlet of the replaceable liquid treatment cartridge when connected to the head part. A mix of liquids is returned to the head part, from where it is conducted through a remainder of the apparatus. The flow divider allows the apparatus to have only one inlet. The flow of liquid through the inlet is split into two sub-flows within the apparatus, e.g. within the head part.

A variant of the embodiment of the apparatus in which the at least one device for increasing the level of CO₂ in the liquid includes at least one liquid treatment device for the treatment of liquid by ion exchange including a cation exchange material of which at least a portion is in the hydrogen form includes a sensor system for quantifying a reduction in carbonate hardness of the aqueous liquid in the device for increasing the level of CO₂ in the liquid and determining at least one of the increased level of CO₂ and the increase in the level of CO₂ in dependence on the reduction in carbonate hardness.

The reduction in carbonate hardness corresponds to an increase in free CO₂. Thus, the sensor system provides the information from which the increase in the concentration of minerals dissolved in the liquid treatment device included in the section for processing the filtrate produced by the membrane filtration device can be derived. The increase in free CO₂ can be estimated by determining the reduction in carbonate hardness. A relatively precise estimation will take into account the ratio of magnesium carbonate to calcium carbonate. It is also possible to determine the reduction of the calcium carbonate concentration using the same methods as are available for determining the carbonate hardness reduction but with one or more ion-selective sensors.

In a particular variant hereof, the sensor system includes at least one device for varying a proportion of liquid treated by the cation exchange material of which at least a portion is in the hydrogen form in a blend of liquid further including liquid that has bypassed the cation exchange material of which at least a portion is in the hydrogen form, at least one sensor for measuring a parameter of the liquid depending partly on a concentration of components removable from the liquid by the cation exchange material, and a signal processing device for inferring the reduction from a variation in the signal in response to a variation in the proportion.

A method of determining the carbonate hardness of untreated aqueous liquid using only a sensor downstream of a liquid treatment device for the treatment of liquid by ion exchange and arranged to provide a signal representative of a measure of components removable by the liquid treatment device in the blend of liquid is described in WO 2014/006128 A1. The method of inferring the reduction from a variation in the signal in response to a variation in the proportion obviates the need for a sensor upstream of the liquid treatment device. It is thus not necessary to calibrate two sensors, nor is one of them exposed to completely untreated liquid. The sensor may be a conductance sensor, optionally ion-selective. It may provide a signal adjusted for deviations from a reference temperature and thus include a thermometer. This takes account of the temperature-dependence of activity coefficients of ions in the liquid.

The apparatus includes a membrane filtration device, interposed between the at least one device for increasing a level of CO₂ in the liquid and the processing section.

The membrane filtration device allows a further constraint to be met, namely for the total mineral concentration or TDS value (Total Dissolved Solids). With the membrane filtration device interposed between the at least one device for increasing the level of CO₂ in the liquid and the processing section, the pH of the liquid subjected to membrane filtration is decreased, thus helping avoid incrustation of the membrane or membranes. The COz is not filtered out by the membrane or membranes, but remains in the filtrate. Where the at least one device for increasing the level of CO₂ in the liquid includes at least one liquid treatment device for the treatment of liquid by ion exchange including a cation exchange material of which at least a portion is in the hydrogen form, placing it upstream of the membrane filtration device instead of downstream thereof or in a recirculation conduit of the membrane filtration device. This is because the membrane filtration device would otherwise remove most of the ions against which the hydrogen could be exchanged. Thus, the upstream location allows for a higher free CO₂ level. This is in turn allows for a higher concentration of the mineral or minerals contributing to carbonate hardness in the liquid treated in the sub-section of the processing section accommodating the at least one mineral to be dissolved.

In a variant hereof, the membrane filtration device is arranged to operate in cross-flow mode.

Thus, there is no need for back-washing.

In an embodiment, the apparatus includes at least one of:
at least one device for adjusting a trans-membrane pressure differential in the membrane filtration device; and
at least one device for adjusting a volumetric rate of flow of liquid returned from a retentate outlet of the membrane filtration device to an inlet of the membrane filtration device.

This embodiment allows a wider range of combinations of values of the pH, TDS concentration and carbonate hardness of the conditioned liquid to be set. Higher TDS concentrations can be achieved by decreasing the trans-membrane pressure differential or returning more of the retentate.

A variant of this embodiment includes a control device for providing a signal to effect the adjustment in dependence on at least one of a target value and a target range of a measure representative of a concentration of components in liquid, e.g. a total mineral concentration.

An embodiment of the apparatus includes a sensor for obtaining a signal representative of a parameter at least dependent on a total concentration of minerals dissolved in liquid, e.g. located downstream of a filtrate outlet of the membrane filtration device.

The sensor provides information for manual or automated adjustment of the TDS concentration.

In an embodiment of the apparatus, the membrane filtration device is one of a nanofiltration and a reverse osmosis filtration device.

The membrane or membranes of this embodiment may have a pore size of at most 10 A or be so dense as to be effectively non-porous. The membrane filtration device of this embodiment is effective to remove dissolved minerals from the liquid passing through it.

In an embodiment of the apparatus, the processing section includes at least one replaceable liquid treatment cartridge including at least one chamber accommodating at least one of the minerals.

This makes it easier to handle the minerals at the point of use. Contamination may be avoided, for example.

According to another aspect, a method of conditioning an aqueous liquid according to claim 7 is provided.

In this method, the carbonate hardness is set to approximately a target value or to fall within a target range. A wider range of possible combinations of values for the pH and the carbonate hardness of the conditioned liquid is made available with this method. It is in particular possible to achieve a wider range of target values of the carbonate hardness whilst still meeting constraints imposed on the pH.

Thus, in an embodiment of the method, the level of the CO₂ and the values of the fraction are adjusted subject to at least one constraint on the pH of the conditioned liquid.

In a variant of the method, the step of increasing the level of CO₂ includes subjecting at least some of the liquid to a treatment by ion exchange, wherein liquid is contacted with a cation exchange material of which at least a portion is in the hydrogen form.

This embodiment is suitable for obtaining the levels of CO₂ typically appropriate for application of the apparatus in a point-of use environment, e.g. for conditioning liquid supplied to a beverage machine. Typically, levels in the order of mg·l⁻¹ would be appropriate in such case. Obtaining such levels by direct injection of CO₂ in gas form without subsequent degassing is more difficult.

A variant of this embodiment includes blending the liquid subjected to the treatment by ion exchange with liquid that is at most subjected to a lesser extent to the treatment by ion exchange.

Thus, it is possible to adjust the level of COz.

In a variant of the embodiment in which the step of increasing the level of CO₂ includes subjecting at least some of the liquid to a treatment by ion exchange, wherein liquid is contacted with a cation exchange material of which at least a portion is in the hydrogen form, the step of increasing the level of CO₂ includes reducing the carbonate hardness of the liquid to an extent dependent on at least one of a respective target value and a respective target range of at least one of the pH and the carbonate hardness of the conditioned liquid.

Reducing the carbonate hardness corresponds to raising the level of free COz, so that it actually corresponds to a higher carbonate hardness in the conditioned liquid.

A particular variant hereof includes determining the extent of the reduction, which determination includes at least varying a blending ratio and measuring a resulting variation in value of a parameter of the blended liquid dependent on at least a concentration of components removable from the liquid by subjecting the liquid to the treatment by ion exchange.

Thus, a method as described, for example, in WO 2014/006128 A1 is used to determine the carbonate hardness reduction and thus the increase in free COz. The method allows the carbonate hardness of the untreated liquid to be determined. With knowledge of the blending ratio and the efficacy of the carbonate hardness reduction by means of the treatment by ion exchange (which may be assumed to be 100 %), the reduction in carbonate hardness can be quantified.

The liquid is subjected to membrane filtration between the steps of increasing the level of CO₂ and dissolving the at least one mineral contributing to carbonate hardness.

This allows the total concentration of dissolved minerals (TDS concentration) to be reduced. Furthermore, control of the pH and the carbonate hardness is easier, because anions that do not feature in the carbonate system are removed. As a bonus effect, the increased level of COz helps keep the membrane or membranes free from incrustations.

In a variant of this embodiment, the membrane filtration process is a cross-flow filtration process.

There is thus no need for back-washing. The increased level of CO₂ contributes to an acceptable lifespan of the membrane or membranes.

An embodiment includes adjusting at least one of:
a trans-membrane pressure differential; and
a volumetric ratio with which retentate obtained in the membrane filtration process is mixed with other liquid to form a mix of liquid subjected to membrane filtration.

The TDS concentration in the conditioned liquid can thus be adjusted.

An embodiment of the method according to the invention includes the use of an apparatus according to the invention.

The invention will be explained in further detail with reference to the accompanying drawings, in which:
- Fig. 1: is a schematic diagram of a first liquid treatment apparatus;
- Fig. 2: is a diagram showing the distribution of carbonate species as a fraction of total dissolved carbonate in relation to solution pH; and
- Fig. 3: is a schematic diagram of a variant of the first liquid treatment apparatus; and
- Fig. 4: is a schematic diagram of a second liquid treatment apparatus.

A liquid treatment apparatus for the treatment of an aqueous liquid includes an inlet 1 and an outlet 2. The liquid may be mains drinking water, in which case the inlet 1 may include a coupler for connecting the apparatus to the mains drinking water supply. The outlet 2 may include at least one coupler for connecting the apparatus to one or more conduits for conducting liquid to one or more appliances (not shown). An example of such an appliance is a coffee machine, e.g. for a catering establishment.

The apparatus is configured to allow the aqueous liquid to meet several requirements simultaneously. This is the case even if the liquid received at the inlet is relatively saline, such as might be the case for drinking water in coastal regions. The requirements are the pH, the TDS (total dissolved solids) and the carbonate hardness (also referred to as alkalinity or temporary hardness).

In the illustrated embodiment, the apparatus includes an interface 3 for receiving information that is either directly representative of the target values or allows these target values to be inferred. An example of the latter would be a specification of the type of appliance to which the outlet 2 is connected to supply the treated liquid.

The information received through the interface 3 is passed to a control device 4 for controlling the operation of the liquid treatment apparatus.

The apparatus further includes a first conductivity sensor 5 and a second conductivity sensor 6, which are arranged to provide signals to the control device 4. At least the first of the first and second conductivity sensors 5,6 may be ion-selective, so that the signal corresponds to a measure of a concentration of a sub-set of ion species in the liquid, e.g. a measure of the concentration of only calcium carbonate. Generally, however, the method of operating the liquid treatment apparatus does not require such sensors, which are more expensive than conductivity sensors that are not ion-specific. The signal provided by at least one of the sensors 5,6 may be a signal adjusted for deviations from a reference temperature (e.g. 25° C), so it more closely approximates the ion concentration. In another embodiment, the control device makes the adjustment based on a signal from a separate thermometer (not shown). The adjustment may also be dispensed with, depending on the desired degree of accuracy.

The liquid treatment apparatus includes a first liquid treatment device 7 including a first head part 8 and a first replaceable liquid treatment cartridge 9. The first cartridge 9 has at least two inlet ports and at least one outlet port. The first cartridge 9 is connectable to the first head part 8 such that it is held to the first head part 8 and sealed liquid communication between the inlets of the first cartridge 9 and respective outlets of the first head part 8 and between the outlet or outlets of the first cartridge 9 and a corresponding number of respective inlets of the first head part 8 is established. This is interruptable by releasing the first cartridge 9 from the first head part 8. The connection and configuration of the first head part 8 and the first cartridge 9 may be as described in WO 2008/122496 A1, for example.

The first head part 8 is connected essentially permanently to the inlet 1 via a single conduit. The first head part 8 includes a first variable-ratio flow divider 10 for separating an incoming flow of liquid to be treated into two sub-flows, each provided to a separate respective inlet port of the first cartridge 9. Settings of the first variable-ratio flow divider 10 are adjustable by an actuator controlled by the control device 4. The actuator may be a stepper motor or a servo motor, for example. The control device 4 is configured to relate the volumetric flow rate ratio between the sub-flows to a value of the settings under its control.

The first cartridge 9 includes a first bed 11 of liquid treatment medium including cation exchange resin of which at least a portion is in the hydrogen form. It may be essentially completely in the hydrogen form on first use. Alternatively, some of the ion exchange resin may initially be loaded with an alkali metal ion, e.g. sodium or potassium. At least the majority of the cation exchange resin is initially in the hydrogen form. That is to say that the majority of functional sites per unit volume (volumetric capacity as determined e.g. in accordance with DIN 54403 or ASTM D4266) has a hydrogen ion as its counterion. The liquid treatment medium may include a mixture of different resins or only one cation exchange resin. The cation exchange resin or resins may be weakly acidic cation exchange resin, e.g. having carboxyl groups as their functional groups. The liquid treatment medium in the first bed 11 may include other materials than cation exchange resins.

In use, the hydrogen is desorbed in exchange for magnesium and calcium ions. The hydrogen reacts with bicarbonate ions to form H₂O and CO₂. The CO₂ is not gassed out, because the liquid treatment apparatus forms an essentially closed system. Instead, it is present as free CO₂.

The first cartridge 9 further includes a second bed 12 of liquid treatment medium, separated from the first bed 11 by a liquid-permeable retainer device 13. The second bed 12 may contain a liquid treatment medium for the treatment of liquid by sorption, e.g. a liquid treatment medium for the treatment of liquid other than by ion exchange. The liquid treatment medium may in particular include activated carbon.

The first sub-flow created by the first variable-ratio flow divider 10 is conducted to an opposite end of the first cartridge 9 to the end by which it is connected to the first head part 8 by a fall tube 14. From there it passes through the first bed 11 to the second bed 12. The second sub-flow is conducted directly to the second bed 12, bypassing the first bed 11. The two sub-flows mix in the second bed 12, from where the liquid is returned to the first head part 8. The first conductivity sensor 5 is located immediately downstream of the first head part 8. It thus measures a property of the liquid mix comprised of liquid treated in the first bed 11 and liquid that has bypassed the first bed 11.

The control device 4 sets the reduction in the carbonate hardness of the totality of liquid treated in the first liquid treatment device 7. To this end, a method along the lines of that disclosed in WO 2014/006128 A1 is carried out, the essentials of which are repeated here.

The untreated liquid will have a specific electrical conductance *s₀* that is the sum of the electrical conductance *s_{CH}* due to the carbonate and bicarbonate ions of the components contributing to carbonate hardness and the conductance *s₁* =*s₀-s_{CH}* due to other components. It will be assumed here that the first bed 11 is completely effective in removing the carbonate and bicarbonate ions of the components contributing to carbonate hardness. These are replaced by CO₂, so that the conductance of the liquid treated in the first bed 11 has the value *s₁*. It will be assumed that the liquid that bypasses the first bed 11 retains its original specific conductance *s₀*. The fraction of liquid that has bypassed the first bed 11 in the mix to which the first conductivity sensor 5 is exposed is referred to here as the blending fraction *x*. The first conductivity sensor 5 thus measures a specific electrical conductance *s*(*x*), wherein *s*(*x*) = *x·s₀* + (1*-x*)·(*s*₀ *- s_{CH}*) = *s*₀ -(1*-x*)·*s_{CH}.* The specific electrical conductance *s_{CH}* due to the carbonate hardness can be obtained by determining the derivative *s'(x)*. The value of the carbonate hardness can be obtained by multiplying this derivative by a conversion factor *F*. This conversion factor *F* may be a pre-determined constant or determined by means of a method as set out in WO 2014/006129 A1. The reduction *ΔCH* then follows as Δ*CH* = (1*-x*)· *F* · *s'*(*x*). The value of the derivative *s'(x)* of the electrical conductance with respect to the blending fraction *x* is approximated by varying the blending fraction by a small amount *Δx* and determining the resultant variation *Δs* in the electrical conductance *s*(*x*) measured by the first conductivity sensor 5. In this way, the control device 4 is able to determine the reduction in carbonate hardness and thus the amount of free CO₂ generated using the signal from only the first conductivity sensor 5. There is no need to provide a further conductivity sensor upstream of the first liquid treatment device 7 and to subtract the conductance determined by the first conductivity sensor 5 from that measured by such a further sensor. Thus, calibration problems due to different rates of sensor drift and problems with scale formation on an upstream sensor are avoided.

In a variant of this method, an ion-selective conductivity sensor (not shown) is used in addition to the first conductivity sensor 5. This additional sensor enables the concentration of only calcium ions or only magnesium ions to be determined, for example. This is useful, because the level of free CO₂ depends on whether the concentration of CaCO₃ or MgCO₃ is reduced. Thus, with knowledge of the ratio of the concentration of calcium ions to magnesium ions in the untreated water enables the level of free CO₂ to be determined more accurately from the reduction *ΔCH* in carbonate hardness.

Although the illustrated embodiment assumes that the control device 4 is able to relate settings of the first variable-ratio flow divider 10 to a value of the blending fraction *x*, an alternative embodiment may include flow meters to determine the volumetric flow rate ratio between the two sub-flows created by the first variable-ratio flow divider 10.

The liquid treated by the first liquid treatment device 7 is conducted to an inlet 15 of a membrane filtration device 16 arranged to operate as a cross-flow filtration device. It thus has an outlet 17 for retentate and an outlet 18 for filtrate. The membrane filtration device 16 may include one or more membrane modules, e.g. in the form of a spiral wound membrane module, a hollow fibre membrane module, a tubular membrane module and/or a membrane in sheet form mounted on a frame. The membrane or membranes may have a pore size of at most 10 A, indeed be nonporous, so that the membrane filtration device 16 is effective to remove at least some ions. However, the membrane or membranes is or are permeable to the free CO₂. The membrane or membranes may be composite membranes, e.g. with a porous sublayer and a thin dense, for example nonporous top layer. In a reverse osmosis membrane, water and small molecules such as CO₂ diffuse through vacancies in the molecular structure of the membrane material, whereas ions in solution and larger molecules do not. An example of a suitable membrane is a composite membrane comprising a support layer with a thickness of ~ 120 µm made of polyester, an ultrafiltration membrane with a thickness of ~ 40 µm made of polysulfone or polyethersulfone and an active layer with a thickness of ~ 200 nm made of polyamide or cellulose acetate.

The filtrate exiting through the filtrate outlet 18 thus has a relatively low TDS value, but contains free CO₂. The recovery ratio, the ratio of filtrate to liquid supplied to the inlet 15 can be varied by adjusting a variable flow resistance 19. The settings of the variable flow resistance 19 are adjustable under the control of the control device 4, which uses the signal from the second conductivity sensor 6 for this purpose.

In an embodiment, it is also or alternatively possible to vary the trans-membrane pressure differential by means of a pump 20 or a further or alternative variable flow resistance (not shown), located upstream of the inlet 15.

The filtrate passes to a second liquid treatment device 21, which includes a second head part 22 and a second replaceable liquid treatment cartridge 23. The second cartridge 23 has at least one inlet port and at least one outlet port. The second cartridge 23 is connectable to the second head part 22 such that it is held to the second head part 22 and sealed liquid communication between the inlet port or ports of the second cartridge 23 and respective outlet ports of the second head part 22 and between the outlet port or outlet ports of the second cartridge 23 and a corresponding number of respective inlet ports of the second head part 22 is established. This is interruptable by releasing the second cartridge 23 from the second head part 22. The connection and configuration of the second head part 22 and the second cartridge 23 may be as described in WO 2008/122496 A1, for example.

The second head part 22 includes a second variable-ratio flow divider 24 for separating a flow of liquid into at least two sub-flows. At least one of the sub-flows is led into the second replaceable liquid treatment cartridge 23 through an outlet port of the second head part 22 and an inlet port of the second replaceable liquid treatment cartridge 23. It is conducted to an opposite end of the second replaceable liquid treatment cartridge 23 to the end connected to the second head part 22. From there, it passes through a bed 25 of minerals, which dissolve into the liquid. The liquid passes through a liquid-permeable retainer device 26 to an outlet port of the second replaceable liquid treatment cartridge 23 in liquid communication with an inlet port of the second head part 22, and from there to a mixing location 27 in the second head part 22. The liquid forming the sub-flow or sub-flows passed through the bed of minerals 25 is mixed with the other sub-flow or sub-flows created by the second variable-ratio flow divider 24 at the mixing location. The other sub-flow or sub-flows bypass the second replaceable liquid treatment cartridge 23 and are thus composed essentially of filtrate carrying free CO₂.

In an alternative embodiment, the bypass is not through the second head part 22 but through a section of the second replaceable liquid treatment cartridge 23 separate from the bed 25 of minerals, so that at least one sub-flow still bypasses the bed 25 of minerals. In such an embodiment, the mixing location may be in the cartridge 23, so that the second head part 22 need not include a bypass conduit. This embodiment would allow for the use of a second head part 22 of identical construction to the first head part 8.

The minerals in the bed 25 may include any mineral or mixture of minerals for increasing the carbonate hardness. They may include at least one of magnesium carbonate and calcium carbonate, e.g. in granular form. They may include any one or more of magnesium oxide, calcium oxide, magnesium calcium carbonate (MgCa(CO₃)₂), magnesium hydroxide and calcium hydroxide. They may be present in granular form. In an alternative embodiment, the second replaceable liquid treatment cartridge 23 may be arranged to mix a concentrated mineral solution or paste with the filtrate passing through it.

The free CO₂ increases the solubility of the minerals in the bed 25, such that the CO₂ concentration determines the carbonate hardness of the liquid leaving the second replaceable liquid treatment cartridge 23.

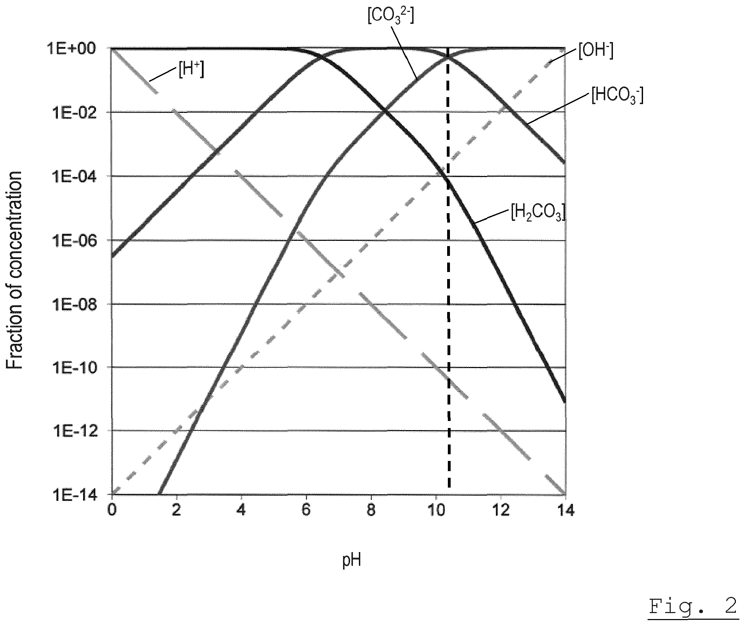

If the mineral in the bed 25 consists essentially of magnesium carbonate , then the pH of the liquid leaving the second replaceable liquid treatment cartridge 23 is always approximately the same, as shown in Fig. 2, provided the level of free CO₂ is in the order of mg·l⁻¹. The diagram is valid for a closed system in which no CO₂ is added or removed. The pH will then be at the value indicated by the dashed line, i.e. a little over 10, due to the presence of large quantities of undissolved carbonate minerals. This embodiment is simple to operate.

For other minerals or mineral mixtures, the carbonate hardness of the liquid passing through the bed 25 will vary with the level of free CO₂. It will be relatively stable within a range of values of the level of free CO₂, which is the range in which control of the carbonate hardness and pH of the conditioned liquid provided at the outlet 2 is simplest. The pH will generally not show the same dependency on the level of free CO₂.

From the mixing location 27, the conditioned aqueous liquid flows to the outlet 2 of the liquid treatment apparatus. In an alternative embodiment, it may be conducted to a tank from which it can be dispensed on demand.

The control device 4 is arranged to control the first and second variable-ratio flow dividers 10,24 and the variable flow resistance 19 such that the conditioned liquid meets several requirements. As an example, the apparatus may be used to treat relatively saline drinking water to produce drinking water conditioned for brewing coffee. It is recommended, e.g. by trade bodies such as Deutscher Kaffeeverband, that such water have the following properties:

| | |
|---|---|
| total mineral contents (TDS): | 100 - 200 mg·l⁻¹; |
| carbonate hardness: | 3-6 °dH; and |
| pH: | 6.5-7.5. |

In a practical embodiment of the apparatus, the control device 4 will consult data stored in memory that relate the carbonate hardness of the liquid at the inlet 1 and a target value of the carbonate hardness at the outlet 2 with settings of at least the first and second variable-ratio flow dividers 10,24. The carbonate hardness of the liquid at the inlet 1 is required in order to be able to set a particular level of free CO₂. The stored settings ensure that the constraints on the value of the pH of the conditioned liquid to be supplied at the outlet 2 are also met.

Such stored data may be obtained in an iterative process as follows. First, the approximate concentration of free CO₂ necessary to arrive at the upper end of the recommended carbonate hardness range is determined. The appropriate settings of the second variable-ratio flow divider 24 for arriving at a pH below the upper end of the recommended range are then determined. If these would result in a value of the carbonate hardness that is too low, a new value of the free CO₂ is determined in a further iteration. Once values for meeting both requirements have been determined, the variable-ratio flow dividers 10,24 are adjusted to appropriate settings, whereupon at least one of the variable-flow resistance 19 and the pump 20 is adjusted to meet the TDS requirements. This adjustment does not appreciable affect the carbonate hardness, since it has in any case already been reduced by the first liquid treatment device 7 and the membranes in the membrane filtration device 16 will predominantly allow the monovalent ions through, as opposed to the divalent ones.

It is thus possible to ensure that several requirements are met, even if the liquid received at the inlet 1 has a relatively high sodium chloride concentration.

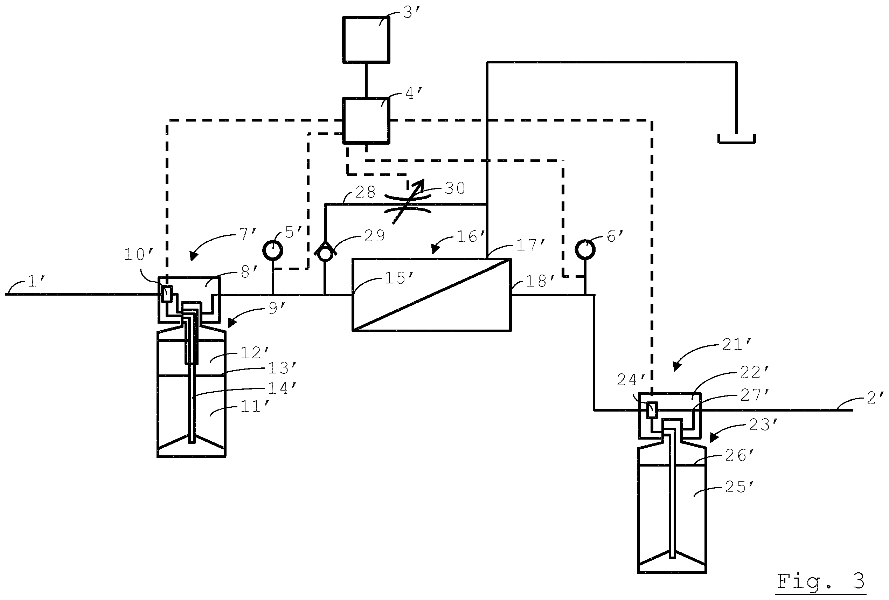

Instead of controlling the variable flow resistance 19 or the pump 20 in dependence on at least one of a target value and a target range for the TDS, an alternative embodiment (Fig. 3) includes a recirculation line 28 for conducting a variable portion of the liquid from the retentate outlet 17' back to the inlet 15' of the membrane filtration device 16. The recirculation line 28 includes a one-way valve 29 for ensuring that liquid can only flow from the retentate outlet 17' to the inlet 15', and may include a pump (not shown). The control device 4' determines the mixing ratio of liquid from the retentate outlet 17' to liquid from the first liquid treatment device 7' in dependence on at least one of a target value and a target range of a measure representative of a concentration of components in liquid, e.g. the TDS. The mixing ratio is set by controlling a variable flow resistance 30.

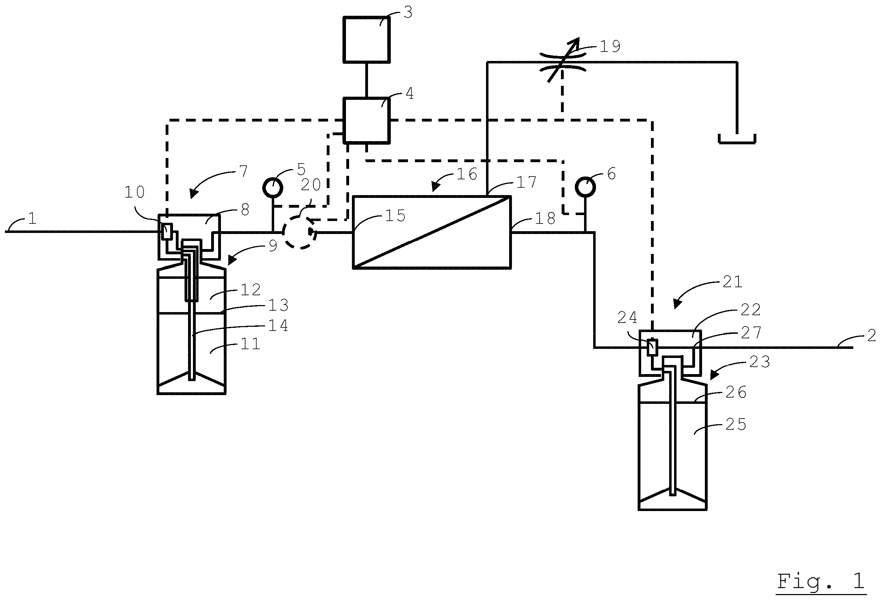

In other respects, the apparatus of Fig. 3 is like that of Fig. 1, so that like parts have been given like reference numerals.

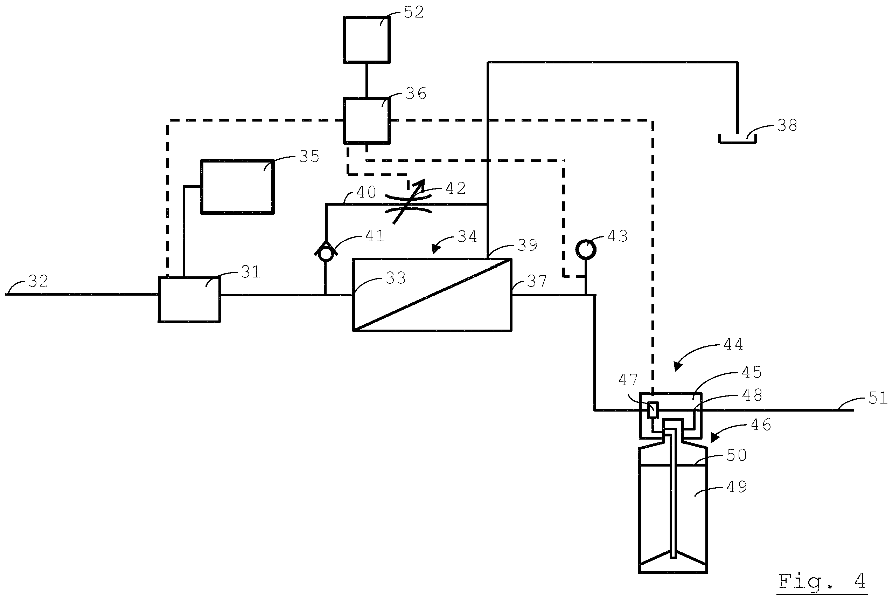

A second liquid treatment apparatus (Fig. 4) differs in that it does not make use of the first liquid treatment device 7,7' that includes a replaceable liquid treatment cartridge 9,9' with a bed 11,11' of liquid treatment medium including weakly acidic cation exchange resin in the hydrogen form. Instead, an in-line carbonation device 31 is provided between an inlet 32 of the second liquid treatment apparatus and an inlet 33 of a membrane filtration device 34 arranged to operate in cross-flow mode. The in-line carbonation device 31 is provided with CO₂ in gas form from a source 35 such as a tank or replaceable gas bottle. The level of CO₂ in the liquid supplied to the filtration device inlet 33 is controlled or regulated by a control device 36. Just one possible example of a suitable in-line carbonation device 31 is described in WO 2012/006157 A2. As described therein, the level of CO₂ can be set by varying the pressure of the CO₂ in gas form relative to that of the liquid. In this respect, it is noted that a pump (not shown) may be provided upstream of the in-line carbonation device 31 and that the in-line carbonation device 31 may include a pressure regulator for the CO₂.

The carbonated liquid is supplied to the inlet 33 of the membrane filtration device 34. The latter is as described above in relation to the membrane filtration devices 16,16' of the first liquid treatment apparatus. The CO₂ thus passes through the membrane or membranes and emerges in the filtrate supplied to a filtrate outlet 37 of the membrane filtration device 34. At least some retentate is supplied to drain 38 through a retentate outlet 39. However, in the illustrated embodiment, a variable fraction of the retentate is conducted back to the inlet 33 through a recirculation line 40 in which a one-way valve 41 and a variable flow resistance 42 are arranged. The control device 36 is arranged to cause settings of the variable flow resistance 19 to be adjusted in order to set the size of the fraction of the retentate returned to the inlet 33.

The filtrate from the filtrate outlet 37 flows past a conductivity sensor 43 arranged to provide a signal to the control device 36. The signal may be representative of the specific electrical conductance or of the specific electrical conductance adjusted for deviations from a reference temperature.

A second liquid treatment device 44 of identical composition to the second liquid treatment devices 21,21' of the embodiments of Figs. 1 and 3 is arranged downstream of the conductivity sensor 43. It thus includes a head part 45 and a replaceable liquid treatment cartridge 46. The head part 45 includes a variable-ratio flow divider 47, of which the settings are controlled or regulated by the control device 36. The head part 45 also includes a mixing location 48.

The cartridge 46 includes a mineral bed 49 including minerals that dissolve into the liquid passing through the bed so as to increase the carbonate hardness. The composition of the mineral bed 49 corresponds to that of the mineral bed 25 as described above for the other embodiments. A liquid-permeable retainer device 50 holds the mineral bed 49 in place

In use, the liquid forming the sub-flow or sub-flows passed through the mineral bed 49 is mixed with the other sub-flow or sub-flows created by the variable-ratio flow divider 47 at the mixing location 48. These other sub-flow or sub-flows bypass the replaceable liquid treatment cartridge 46 and are thus composed essentially of filtrate carrying free CO₂.

Information for specifying a respective target value or target range for at least the carbonate hardness of liquid provided at an outlet 51 of the apparatus is obtained by the control device 36 through an interface 52. It may then proceed to adjust the CO₂ level for meeting the carbonate hardness requirements and the settings of the variable-ratio flow divider 47 for meeting the pH requirements in an iterative process, whereupon the settings of the in-line carbonation device 31 and variable-ratio flow divider 47 are caused to be adjusted to the appropriate values. In embodiments in which a TDS requirement is also to be met, the settings of the variable flow resistance 42 are also adjusted.

In another embodiment, a lookup table is used to obtain the combinations of settings appropriate to meet the requirements. In yet another embodiment, such a lookup table is provided to a user and the settings of the in-line carbonation device 31 and the variable-ratio flow divider 47 are set by hand by the user.

The invention is not limited to the embodiments described above, which may be varied within the scope of the accompanying claims. The first liquid treatment device 7 need not be the only liquid treatment device between the inlet 1 and the inlet 15 of the membrane filtration device 16. For example, there may be a sediment filter upstream of the first liquid treatment device 7 or a separate activate carbon filter between the first liquid treatment device 7 and the membrane filtration device 16.

The first and second variable-ratio flow dividers 10,24 need not be coupled to a control device 4 for adjusting their settings. In an alternative embodiment, at least one the first and second variable-ratio flow dividers 10,24, e.g. both, is adjustable by hand or by means of a hand tool. A user may be provided with a device for measuring the carbonate hardness of water received at the inlet 1 and a table for relating this value and a chosen target value of the carbonate hardness in the water at the outlet 2 to settings of the variable-ratio flow dividers 10,24.

Instead of first determining the approximate concentration of free CO₂ necessary to arrive at the upper end of a recommended carbonate hardness range and then determining settings of the second variable-ratio flow divider 24 for arriving at a pH below the upper end of the recommended range, it is also possible to start with a determination of the settings of the second variable-ratio flow divider 24 and to adjust the settings of the first variable-ratio flow divider 10 in a subsequent step.

### List of reference numerals

- 1,1' -: inlet
- 2,2' -: outlet
- 3,3' -: interface
- 4,4' -: control device
- 5,5' -: 1^{st} conductivity sensor
- 6,6' -: 2^{nd} conductivity sensor
- 7,7' -: 1^{st} liquid treatment device
- 8,8' -: 1^{st} head part
- 9,9' -: 1^{st} replaceable liquid treatment cartridge
- 10,10' -: 1^{st} variable-ratio flow divider
- 11,11' -: 1^{st} bed of liquid treatment medium
- 12,12' -: 2^{nd} bed of liquid treatment medium
- 13,13' -: liquid-permeable retainer device
- 14,14' -: fall tube
- 15,15' -: inlet
- 16,16' -: membrane filtration device
- 17,17' -: outlet for retentate
- 18,18' -: outlet for filtrate
- 19 -: variable flow resistance
- 20 -: (optional) pump
- 21,21' -: 2^{nd} liquid treatment device
- 22,22' -: 2^{nd} head part
- 23,23' -: 2^{nd} replaceable liquid treatment cartridge
- 24,24' -: 2^{nd} variable-ratio flow divider
- 25,25' -: mineral bed
- 26,26' -: 2^{nd} liquid-permeable retainer device
- 27,27' -: mixing location
- 28 -: recirculation line
- 29 -: one-way valve
- 30 -: variable flow resistance
- 31 -: in-line carbonation device
- 32 -: inlet
- 33 -: filtration device inlet
- 34 -: membrane filtration device
- 35 -: source of CO₂
- 36 -: control device
- 37 -: filtrate outlet
- 38 -: drain
- 39 -: retentate outlet
- 40 -: recirculation line
- 41 -: one-way valve
- 42 -: variable flow resistance
- 43 -: conductivity sensor
- 44 -: 2^{nd} liquid treatment device
- 45 -: head part
- 46 -: replaceable liquid treatment cartridge
- 47 -: variable-ratio flow divider
- 48 -: mixing location
- 49 -: mineral bed
- 50 -: liquid-permeable retainer device
- 51 -: outlet
- 52 -: interface

## Claims

1. Apparatus for conditioning an aqueous liquid, including:
at least one device (7;7';31) for increasing a level of CO₂ in the liquid;
a membrane filtration device (16;16';34); and
a processing section (21;21';44), downstream of the at least one device (7;7';31) for increasing the level of CO₂ in the liquid,
the processing section (21;21';44) including at least one liquid treatment device (23;23';46) for dissolving at least one mineral contributing to carbonate hardness into at least some of the liquid passing through the section,
wherein the processing section (21;21';44) includes a sub-section (25;25';49) accommodating the at least one mineral to be dissolved, defines a flow path bypassing the sub-section (25;25';49) and includes a mixing location (27;27';48) for blending at an adjustable ratio a fraction of liquid led through the sub-section (25;25';49) with a further fraction of liquid led along the flow path bypassing the sub-section (25;25';49), the fraction and the further fraction being fractions of the liquid of which the level of CO₂ has been increased prior to separating it into fractions, **characterised in that**
the membrane filtration device (16;16';34) is interposed between the at least one device (7;7';31) for increasing a level of CO₂ in the liquid and the processing section, and **in that**
the at least one device (7;7';31) for increasing a level of CO₂ in the liquid is arranged to increase the level to an adjustable value.

2. Apparatus according to claim 1,
wherein the at least one device (7;7') for increasing the level of CO₂ in the liquid includes at least one liquid treatment device (9;9') for the treatment of liquid by ion exchange including a cation exchange material of which at least a portion is in the hydrogen form.

3. Apparatus according to claim 1 or 2,
wherein the membrane filtration device (16;16';34) is arranged to operate in cross-flow mode.

4. Apparatus according to any one of the preceding claims, including at least one of:
at least one device (19,20) for adjusting a trans-membrane pressure differential in the membrane filtration device (16;34); and
at least one device (30;42) for adjusting a volumetric rate of flow of liquid returned from a retentate outlet (17';39) of the membrane filtration device (16';34) to an inlet (15';33) of the membrane filtration device (16';34).

5. Apparatus according to any one of the preceding claims,
including a sensor (6;6';43) for obtaining a signal representative of a parameter at least dependent on a total concentration of minerals dissolved in liquid, e.g. located downstream of a filtrate outlet (18;18';37) of the membrane filtration device (16;16';34).

6. Apparatus according to any one of the preceding claims,
wherein the processing section (21;21';44) includes at least one replaceable liquid treatment cartridge (23;23';46) including at least one chamber accommodating at least one of the minerals.

7. Method of conditioning an aqueous liquid, including:
dissolving at least one mineral contributing to carbonate hardness in water into a fraction of the liquid, followed by blending the fraction with a further fraction of the liquid,
wherein a level of CO₂ in the liquid is increased prior to separating it into the fractions,
**characterised in that**
the liquid is subjected to membrane filtration between the steps of increasing the level of CO₂ and dissolving the at least one mineral contributing to carbonate hardness, and
by adjusting the values of the fractions and the level of the CO₂ in dependence on at least one of a respective target value and a respective target range of the carbonate hardness of the conditioned liquid.

8. Method according to claim 7,
wherein the level of the CO₂ and the values of the fractions are adjusted subject to at least one constraint on the pH of the conditioned liquid.

9. Method according to claim 8,
wherein the step of increasing the level of CO₂ includes subjecting at least some of the liquid to a treatment by ion exchange, wherein liquid is contacted with a cation exchange material of which at least a portion is in the hydrogen form.

10. Method according to claim 9,
including blending the liquid subjected to the treatment by ion exchange with liquid that is at most subjected to a lesser extent to the treatment by ion exchange.

11. Method according to claim 9 or 10,
wherein the step of increasing the level of CO₂ includes reducing the carbonate hardness of the liquid to an extent dependent on at least one of a respective target value and a respective target range of at least one of the pH and the carbonate hardness of the conditioned liquid.

12. Method according to claim 11,
including determining the extent of the reduction, which determination includes at least varying a blending ratio and measuring a resulting variation in value of a parameter of the blended liquid dependent on at least a concentration of components removable from the liquid by subjecting the liquid to the treatment by ion exchange.

13. Method according to any one of claims 7-12,
wherein the membrane filtration process is a cross-flow filtration process.

14. Method according to any one of claims 7-13,
including adjusting at least one of:
a trans-membrane pressure differential; and
a volumetric ratio with which retentate obtained in the membrane filtration process is mixed with other liquid to form a mix of liquid subjected to membrane filtration.

15. Method according to any one of claims 7-14,
including the use of an apparatus according to any one of claims 1-6.

## Patentansprüche

1. Einrichtung zur Konditionierung einer wässrigen Flüssigkeit, die beinhaltet:
mindestens eine Vorrichtung (7;7';31) zum Erhöhen einer Menge an CO2 in der Flüssigkeit;
eine Membranfiltervorrichtung (16; 16';34); und
ein Verarbeitungsabschnitt (21; 21'; 44) stromabwärts der mindestens einen Vorrichtung (7;7';31) zum Erhöhen der Menge an CO2 in der Flüssigkeit, wobei der Verarbeitungsabschnitt (21;21';44) mindestens eine Flüssigkeitsbehandlungsvorrichtung (23;23';46) zum Auflösen von mindestens einem Mineral, das zur Karbonathärte beiträgt, in mindestens einem Teil der Flüssigkeit beinhaltet, die durch den Abschnitt verläuft, wobei der Verarbeitungsabschnitt (21;21';44) einen Unterabschnitt (25;25';49) beinhaltet, der das mindestens eine aufzulösende Mineral aufnimmt, einen Flussweg definiert, der den Unterabschnitt (25;25';49) umgeht, und eine Mischstelle (27;27';48) zum Vermischen in einem einstellbaren Verhältnis einer Fraktion der Flüssigkeit beinhaltet, die durch den Unterabschnitt (25;25';49) geleitet wird, wobei eine weitere Fraktion von Flüssigkeit, die entlang des Flussweges unter Umgehung des Unterabschnitts (25;25';49) geleitet wird, wobei die Fraktion und die weitere Fraktion Fraktionen der Flüssigkeit sind, deren Menge an CO2 vor deren Trennung in Fraktionen erhöht wurde, **dadurch gekennzeichnet, dass**
die Membranfiltervorrichtung (16;16';34) zwischen der mindestens einen Vorrichtung (7;7';31) zum Erhöhen der Menge an CO2 in der Flüssigkeit und dem Verarbeitungsabschnitt eingesetzt ist, und dadurch, dass
die mindestens eine Vorrichtung (7;7';31) zum Erhöhen der Menge an CO2 in der Flüssigkeit angeordnet ist, um die Menge auf einen anpassbaren Wert zu erhöhen.

2. Einrichtung nach Anspruch 1,
wobei die mindestens eine Vorrichtung (7;7') zum Erhöhen der Menge an CO₂ in der Flüssigkeit mindestens eine Flüssigkeitsbehandlungsvorrichtung (9;9') zur Behandlung von Flüssigkeit durch lonenaustausch umfasst, die ein Kationenaustauschmaterial beinhaltet, von dem zumindest ein Abschnitt in der Wasserstoffform vorliegt.

3. Einrichtung nach Anspruch 1 oder 2,
wobei die Membranfiltervorrichtung (16;16';34) angeordnet ist, um im Querstrommodus betrieben zu werden.

4. Einrichtung nach einem der vorstehenden Ansprüche,
die mindestens eines beinhaltet von:
mindestens einer Vorrichtung (19,20) zum Anpassen einer Transmembran-Druckdifferenz in der Membranfiltervorrichtung (16;34); und
mindestens einer Vorrichtung (30;42) zum Anpassen eines Volumenstroms eines von einem Retentatauslass (17';39) der Membranfiltervorrichtung (16';34) zurückgeführten Flüssigkeitsflusses zu einem Einlass (15';33) der Membranfiltervorrichtung (16';34).

5. Einrichtung nach einem der vorstehenden Ansprüche,
die einen Sensor (6;6';43) zum Erhalten eines Signals beinhaltet, das repräsentativ für einen Parameter ist, der zumindest von einer Gesamtkonzentration der in der Flüssigkeit gelösten Mineralien abhängig ist, der sich z. B. stromabwärts eines Filtratauslasses (18;18';37) der Membranfiltervorrichtung (16;16';34) befindet.

6. Einrichtung nach einem der vorstehenden Ansprüche,
wobei der Verarbeitungsabschnitt (21;21';44) mindestens eine austauschbare Flüssigkeitsbehandlungskartusche (23;23';46) beinhaltet, die mindestens eine Kammer beinhaltet, die mindestens eines der Mineralien aufnimmt.

7. Verfahren zum Konditionieren einer wässrigen Flüssigkeit, das beinhaltet:
Auflösen von mindestens einem Mineral, das zur Karbonathärte im Wasser beiträgt, in eine Fraktion der Flüssigkeit, gefolgt vom Vermischen der Fraktion mit einer weiteren Fraktion der Flüssigkeit,
wobei die Menge an CO₂ in der Flüssigkeit vor dem Trennen in die Fraktionen erhöht wird,
**dadurch gekennzeichnet, dass**
die Flüssigkeit zwischen den Schritten des Erhöhens der Menge an CO₂ und dem Auflösen des mindestens einen Minerals, das zur Karbonathärte beiträgt, einer Membranfilterung unterzogen wird, und
durch Anpassen der Werte der Fraktionen und der Menge an CO₂ in Abhängigkeit von mindestens einem jeweiligen Zielwert und einem jeweiligen Zielbereich der Karbonathärte der konditionierten Flüssigkeit.

8. Verfahren nach Anspruch 7,
wobei die Menge an CO₂ und die Werte der Fraktionen durch Unterziehen mindestens einer Einschränkung hinsichtlich des pH-Werts der konditionierten Flüssigkeit angepasst werden.

9. Verfahren nach Anspruch 8,
wobei der Schritt des Erhöhens der Menge an CO₂ das Unterziehen zumindest eines Teils der Flüssigkeit einer Behandlung durch lonenaustausch beinhaltet, wobei die Flüssigkeit mit einem Kationenaustauschmaterial in Kontakt gebracht wird, von dem zumindest ein Abschnitt in der Wasserstoffform vorliegt.

10. Verfahren nach Anspruch 9,
welches das Vermischen der Flüssigkeit, die der lonenaustauschbehandlung unterzogen wurde, mit einer Flüssigkeit beinhaltet, die höchstens in einem geringeren Maße der lonenaustauschbehandlung unterzogen wurde.

11. Verfahren nach Anspruch 9 oder 10,
wobei der Schritt des Erhöhens der Menge an CO₂ das Reduzieren der Karbonathärte der Flüssigkeit in einem Ausmaß beinhaltet, das von mindestens einem jeweiligen Zielwert und einem jeweiligen Zielbereich von mindestens einem von dem pH-Wert und Karbonathärte der konditionierten Flüssigkeit abhängig ist.

12. Verfahren nach Anspruch 11,
welches das Bestimmen des Ausmaßes der Reduktion beinhaltet, wobei das Bestimmen zumindest die Variation eines Vermischungsverhältnisses und die Messung einer resultierenden Wertänderung eines Parameters der vermischten Flüssigkeit umfasst, die zumindest von einer Konzentration von Komponenten abhängt, die aus der Flüssigkeit durch Unterziehen der Flüssigkeit der Behandlung durch lonenaustausch entfernbar sind.

13. Verfahren nach einem der Ansprüche 7-12,
wobei der Membranfilterungsprozess ein Querstromfilterungsprozess ist.

14. Verfahren nach einem der Ansprüche 7-13,
welches das Anpassen von mindestens einem beinhaltet von:
einer Transmembran-Druckdifferenz; und
einem Volumenverhältnis, mit dem das im Membranfilterungsprozess erhaltene Retentat mit anderen Flüssigkeiten gemischt wird, um eine der Membranfilterung unterzogene Flüssigkeitsmischung zu bilden.

15. Verfahren nach einem der Ansprüche 7-14,
welches das Verwenden einer Einrichtung nach einem der Ansprüche 1-6 beinhaltet.

## Revendications

1. Appareil pour conditionner un liquide aqueux, incluant :
au moins un dispositif (7 ; 7' ; 31) pour augmenter le niveau de CO2 dans le liquide ;
un dispositif de filtration sur membrane (16 ; 16' ; 34) ; et
une section de traitement (21 ; 21' ; 44), en aval de l'au moins un dispositif (7 ; 7' ; 31) pour augmenter le niveau de CO2 dans le liquide, la section de traitement (21 ; 21' ; 44) incluant au moins un dispositif de traitement de liquide (23 ; 23' ; 46) pour dissoudre au moins un minéral contribuant à la dureté carbonatée dans au moins une partie du liquide passant à travers la section, dans lequel la section de traitement (21 ; 21' ; 44) inclut une sous-section (25 ; 25' ; 49) recevant l'au moins un minéral à dissoudre, définit un chemin d'écoulement contournant la sous-section (25 ; 25' ; 49) et inclut un emplacement de mélange (27 ; 27' ; 48) pour mélanger à un rapport réglable une fraction de liquide conduite à travers la sous-section (25 ; 25' ; 49), une fraction supplémentaire de liquide étant conduite le long du chemin d'écoulement en contournant la sous-section (25 ; 25' ; 49), la fraction et la fraction supplémentaire étant des fractions du liquide dont le niveau de CO2 a été augmenté avant de le séparer en fractions, **caractérisé en ce que**
le dispositif de filtration sur membrane (16 ; 16' ; 34) est interposé entre l'au moins un dispositif (7 ; 7' ; 31) pour augmenter un niveau de CO2 dans le liquide et la section de traitement, et **en ce que**
l'au moins un dispositif (7 ; 7' ; 31) pour augmenter un niveau de CO2 dans le liquide est conçu pour augmenter le niveau jusqu'à une valeur réglable.

2. Appareil selon la revendication 1,
dans lequel l'au moins un dispositif (7 ; 7') pour augmenter le niveau de CO₂ dans le liquide inclut au moins un dispositif de traitement de liquide (9 ; 9') pour le traitement de liquide par échange d'ions incluant un matériau échangeur de cations dont au moins une partie est sous forme hydrogène.

3. Appareil selon la revendication 1 ou 2,
dans lequel le dispositif de filtration sur membrane (16 ; 16' ; 34) est conçu pour fonctionner en mode flux croisés.

4. Appareil selon l'une quelconque des revendications précédentes,
incluant au moins un parmi :
au moins un dispositif (19, 20) pour régler une différence de pression trans-membranaire dans le dispositif de filtration sur membrane (16 ; 34) ; et
au moins un dispositif (30 ; 42) pour régler un débit volumétrique de liquide renvoyé depuis une sortie de rétentat (17' ; 39) du dispositif de filtration sur membrane (16' ; 34) à une entrée (15' ; 33) du dispositif de filtration sur membrane (16' ; 34).

5. Appareil selon l'une quelconque des revendications précédentes,
incluant un capteur (6 ; 6' ; 43) pour obtenir un signal représentatif d'un paramètre dépendant au moins d'une concentration totale de minéraux dissous dans un liquide, par exemple situé en aval d'une sortie de filtrat (18 ; 18' ; 37) du dispositif de filtration sur membrane (16 ; 16' ; 34).

6. Appareil selon l'une quelconque des revendications précédentes,
dans lequel la section de traitement (21 ; 21' ; 44) inclut au moins une cartouche de traitement de liquide remplaçable (23 ; 23' ; 46) incluant au moins une chambre recevant au moins un des minéraux.

7. Procédé de conditionnement d'un liquide aqueux, incluant :
la dissolution d'au moins un minéral contribuant à la dureté carbonatée de l'eau en une fraction du liquide, suivie du mélange de la fraction avec une fraction supplémentaire du liquide,
dans lequel un niveau de CO₂ dans le liquide est augmenté avant de le séparer en fractions,
**caractérisé en ce que**
le liquide est soumis à une filtration sur membrane entre les étapes d'augmentation du niveau de CO₂ et de dissolution de l'au moins un minéral contribuant à la dureté carbonatée, et
en réglant les valeurs des fractions et le niveau de CO₂ en fonction d'au moins une parmi une valeur cible respective et une plage cible respective de la dureté carbonatée du liquide conditionné.

8. Procédé selon la revendication 7,
dans lequel le niveau de CO₂ et les valeurs des fractions sont réglés, soumis à au moins une contrainte sur le pH du liquide conditionné.

9. Procédé selon la revendication 8,
dans lequel l'étape d'augmentation du niveau de CO₂ inclut la soumission d'au moins une partie du liquide à un traitement par échange d'ions, dans lequel le liquide est mis en contact avec un matériau échangeur de cations dont au moins une partie est sous forme hydrogène.

10. Procédé selon la revendication 9,
incluant le mélange du liquide soumis au traitement par échange d'ions avec un liquide qui est au maximum soumis dans une moindre mesure au traitement par échange d'ions.

11. Procédé selon la revendication 9 ou 10,
dans lequel l'étape d'augmentation du niveau de CO₂ inclut la réduction de la dureté carbonatée du liquide dans une mesure dépendant d'au moins une parmi une valeur cible respective et une plage cible respective d'au moins un parmi le pH et la dureté carbonatée du liquide conditionné.

12. Procédé selon la revendication 11,
incluant la détermination de l'étendue de la réduction, laquelle détermination inclut au moins la variation d'un rapport de mélange et la mesure d'une variation résultante de la valeur d'un paramètre du liquide mélangé en fonction d'au moins une concentration de composants pouvant être retirés du liquide en soumettant le liquide au traitement par échange d'ions.

13. Procédé selon l'une quelconque des revendications 7 à 12,
dans lequel le processus de filtration sur membrane est un processus de filtration à flux croisés.

14. Procédé selon l'une quelconque des revendications 7 à 13,
incluant le réglage d'au moins un parmi :
une différence de pression trans-membranaire ; et
un rapport volumétrique avec lequel un rétentat obtenu lors du processus de filtration sur membrane est mélangé avec un autre liquide pour former un mélange de liquide soumis à une filtration sur membrane.

15. Procédé selon l'une quelconque des revendications 7 à 14,
incluant l'utilisation d'un appareil selon l'une quelconque des revendications 1 à 6.
